# EUROPEAN PATENT APPLICATION

(11) **EP 4 850 846 A1**
(43) Date of publication of application: **09.12.2026**
(21) Application number: 26180479.3
(22) Date of filing: 22.05.2026
(51) Int. Cl.: B23K 26/21, B23K 26/03, B23K 26/70, B23K 31/12

(54) **SECONDARY BATTERY WELDING BEAD INSPECTION METHOD AND SYSTEM**

(30) Priority: 26.05.2025 KR 20250068464
(71) Applicant: SAMSUNG SDI CO., LTD., Yongin-si, Gyeonggi-do 17084 (KR)
(72) Inventor: KIM, DONGHAN, 17084 Yongin-si, Gyeonggi-do (KR); YOO, KYEONGSEON, 17084 Yongin-si, Gyeonggi-do (KR); ROH, JAEHOON, 17084 Yongin-si, Gyeonggi-do (KR)
(74) Representative: Meissner Bolte Partnerschaft mbB

(57) **Abstract**

A secondary battery welding bead inspection method includes: setting an area where a welding bead exists from a welding portion using a confocal optical device; obtaining a confocal image of the area where a welding bead exists and position coordinates of the confocal image using the confocal optical device; determining a boundary of the welding bead by performing image processing using the confocal image of the area where a welding bead exists and the position coordinates of the confocal image; and detecting a pinhole present in a welding bead whose boundary has been determined using the confocal optical device.

## Description

### FIELD

The invention relates to a secondary battery welding bead inspection method and system.

### BACKGROUND

Secondary batteries are batteries that can be charged and discharged, unlike primary batteries that cannot be recharged. Low-capacity secondary batteries are used in small portable electronic devices such as smartphones, feature phones, laptop computers, digital cameras, and camcorders, while large-capacity secondary batteries are widely used as power sources for driving motors in hybrid vehicles and electric vehicles and as power storage batteries. These secondary batteries include an electrode assembly composed of a positive electrode and a negative electrode, a case that accommodates the electrode assembly, and electrode terminals connected to the electrode assembly.

Meanwhile, when secondary battery cells or the like are laser welded, various types of defects may be created in the welding portion. These defects may affect the stability and reliability of secondary batteries, and thus, inspection is required to accurately identify defects in welding portions and verify quality.

The herein-described information disclosed in the background technology of the invention is only intended to improve understanding of the background of the invention, and therefore may include information that does not constitute prior art.

### SUMMARY

The present invention discloses a secondary battery welding bead inspection method including: setting an area where a welding bead exists from a welding portion using a confocal optical device; obtaining a confocal image of the area where a welding bead exists and position coordinates of the confocal image using the confocal optical device; determining a boundary of the welding bead by performing image processing using the confocal image of the area where a welding bead exists and the position coordinates of the confocal image; and detecting a pinhole present in a welding bead whose boundary has been determined using the confocal optical device.

In embodiments, setting the area where a welding bead exists may include: measuring a z-axis profile of the welding portion using the confocal optical device; and setting, from a result of measuring the z-axis profile, an area where a welding bead exists in the welding portion.

In embodiments, a z-axis step height variation of the welding portion may be analyzed from the result of measuring the z-axis profile, and an area with a significant z-axis step height variation may be set as the area where a welding bead exists in the welding portion.

In embodiments, a light wavelength of the confocal optical device may be adjusted according to types of base metal and welding metal of the welding portion.

In embodiments, a measurement focus of the confocal optical device may be adjusted by selecting a wavelength based on light reflectance of base metal of the welding portion.

In embodiments, the image processing may apply a threshold processing method.

In embodiments, detecting the pinhole may include: re-measuring the z-axis profile of the welding bead whose boundary has been determined using the confocal optical device; and detecting, from a result of re-measuring the z-axis profile, a pinhole present in the welding bead whose boundary has been determined.

In embodiments, a z-axis step height variation of the welding bead whose boundary has been determined may be analyzed from the result of re-measuring the z-axis profile, and an area with a significant z-axis step height variation may be detected as an area where a pinhole exists.

In embodiments, detecting the pinhole may include measuring at least one of a position, diameter, and depth of the pinhole.

In embodiments, presence or absence of penetration of the welding portion and a base material of the welding portion may be detected based on the measured depth of the pinhole.

A secondary battery discloses welding bead inspection system comprising: a confocal measurement unit configured to set an area where a welding bead exists from a welding portion using a confocal optical device and measure a confocal image of the area where a welding bead exists and position coordinates of the confocal image; and an image processing unit configured to receive the confocal image of the area where a welding bead exists and the position coordinates of the confocal image from the confocal measurement unit, perform image processing, and determine a boundary of the welding bead, wherein the confocal measurement unit is further configured to detect a pinhole present in a welding bead whose boundary has been determined by the image processing unit.

In embodiments, the confocal measurement unit may be further configured to set an area where a welding bead exists by measuring a z-axis profile of the welding portion.

In embodiments, the confocal measurement unit may be further configured to: analyze a z-axis step height variation of the welding portion from a result of measuring the z-axis profile of the welding portion; and set an area with a significant z-axis step height variation as an area where a welding bead exists in the welding portion.

In embodiments, the confocal optical device may adjust a light wavelength according to types of base metal and welding metal.

In embodiments, the confocal optical device may adjust a measurement focus by selecting a wavelength based on light reflectance of base metal.

In embodiments, the image processing unit may be further configured to perform image processing by applying a threshold processing method.

In embodiments, the confocal measurement unit may be further configured to: re-measure the z-axis profile of the welding bead whose boundary has been determined; and detect, from a result of re-measuring the z-axis profile, a pinhole present in the welding bead whose boundary has been determined.

In embodiments, a z-axis height variation of the welding bead whose boundary has been determined may be analyzed from the result of re-measuring the z-axis profile, and an area with a significant z-axis height variation may be set as an area where a pinhole exists.

In embodiments, at least one of a position, diameter, and depth of the pinhole may be measured from the result of re-measuring the z-axis profile.

In embodiments, presence or absence of penetration of the welding portion and the base material of the welding portion may be detected based on the measured depth of the pinhole.

### BRIEF DESCRIPTION OF THE DRAWINGS

The following drawings attached to this specification illustrate preferred embodiments of the invention, and together with the detailed description of the invention described herein, serve to further facilitate understanding of the technical idea of the invention; therefore, the invention should not be interpreted as being limited to matters described in such drawings:
FIG. 1 is a flowchart schematically illustrating a secondary battery welding bead inspection method according to embodiments of the invention;
FIG. 2 is a perspective view schematically illustrating an example of a secondary battery cell according to embodiments of the invention;
FIG. 3 is a cross-sectional view schematically illustrating an example of a cross section taken along line A-A' of FIG. 2;
FIG. 4 is a perspective view schematically illustrating another example of the secondary battery cell according to embodiments of the invention;
FIG. 5 is a cross-sectional view schematically illustrating an example of a cross section taken along line I-I' of FIG. 4;
FIG. 6 is a graph showing a result of measuring z-axis profile for setting an area where a welding bead exists according to embodiments of the invention;
FIG. 7 is a confocal optical image of an area where a welding bead exists, as measured according to embodiments of the invention;
FIG. 8 is an image showing the result of performing image processing on a confocal image of an area where a welding bead exists, as measured according to embodiments of the invention, to thereby determine the exact boundary of the welding bead;
FIG. 9A is a confocal z-axis image measured to detect a pinhole present in a welding bead whose exact boundary has been determined according to embodiments of the invention;
FIG. 9B is a graph showing a result of measuring z-axis profile for detecting a pinhole present in a welding bead whose exact boundary has been determined according to embodiments of the invention;
FIG. 10 is a table showing the results of comparing quantitative dimensions of pinholes measured using a confocal measurement test and quantitative dimensions of pinholes measured using a vision measurement test according to embodiments of the invention; and
FIG. 11 is a block diagram schematically illustrating a secondary battery welding bead inspection system according to embodiments of the invention.

### DETAILED DESCRIPTION

Hereinafter, preferred embodiments of the invention will be described in detail with reference to the accompanying drawings. Prior to this, the terms or words used in this specification and the claims should not be interpreted as limited to their usual or dictionary meanings, and should be interpreted as meanings and concepts that conform to the technical idea of the invention based on the principle that an inventor may appropriately define the concept of a term to explain the invention in the best manner. Therefore, it should be understood that the embodiments described in this specification and the components illustrated in the drawings are only some preferred embodiments of the invention and do not represent all of the technical ideas of the invention, and that various equivalents and modifications may exist that may replace them as of the filing date of this application.

Additionally, when used herein, the terms "comprise," "include," and/or "comprising" or "including," specify the presence of stated features, numbers, steps, operations, elements, elements, and/or groups thereof, but do not preclude the presence or addition of one or more other features, numbers, operations, elements, elements, and/or groups thereof.

Additionally, to aid understanding of the invention, the attached drawings are not drawn to scale and the dimensions of some components may be exaggerated. Additionally, the same reference numerals may be assigned to the same components in different embodiments.

Although the terms first, second, etc. are used to describe various components, these components are not limited by these terms. These terms are used only to distinguish one component from another, and unless otherwise stated, it is understood that a first component may also be a second component.

Throughout the specification, unless otherwise specifically stated, each element may be singular or plural.

When a component is described as being arranged "on" (or "under") another component, this may mean not only that the component is arranged in direct contact with the upper (or lower) surface of the component, but also that one or more intervening components may be arranged therebetween.

Additionally, when it is described that a component is "connected" or "coupled" to another component, this should be understood to include not only cases where the components are directly connected or coupled, but also cases where one or more other components are "interposed" therebetween, or the components are "connected" or "coupled" via another component. Additionally, when a component is described as being electrically coupled to another component, this includes both cases in which the components are directly electrically coupled and cases in which the components are electrically coupled with another element interposed therebetween.

Hereinafter, embodiments of the invention will be described in detail with reference to the attached drawings, and when describing with reference to the drawings, identical or corresponding components will be given the same drawing reference numerals.

The purpose of the invention is to provide a secondary battery welding bead inspection method and system having improved detection capability for a welding bead of a secondary battery welding portion.

Another object of the invention is to provide a secondary battery welding bead inspection method and system having improved detection capability for a pinhole in a welding bead of a secondary battery welding portion.

Another object of the invention is to provide a secondary battery welding bead inspection method and system capable of detecting a pinhole in a welding bead of a secondary battery welding portion and determining presence or absence of penetration by the pinhole.

However, the technical problems to be solved by the invention are not limited to the problems described herein, and other problems not mentioned may be clearly understood by those skilled in the art from the description of the invention set forth herein.

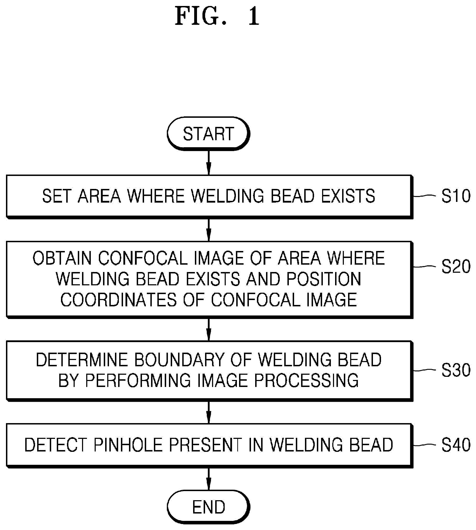

FIG. 1 is a flowchart schematically illustrating a secondary battery welding bead inspection method according to embodiments of the invention.

Referring to FIG. 1, the secondary battery welding bead inspection method according to embodiments of the invention includes: setting an area where a welding bead exists from a welding portion using a confocal optical device (S10); obtaining a confocal image of the area where the welding bead exists and position coordinates of the confocal image using the confocal optical device (S20); determining the exact boundary of the welding bead by performing image processing using the confocal image of the area where the welding bead exists and the position coordinates of the confocal image (S30); and detecting a pinhole present in the welding bead whose boundary has been determined using the confocal optical device (S40).

Although not limited thereto, welding of a secondary battery according to embodiments of the invention may be welding for forming a secondary battery cell, module, and pack. For example, the welding of the secondary battery may be welding inside the secondary battery cell or welding between secondary battery cells. For example, the welding of the secondary battery may be welding between internal components of the secondary battery cell, or welding for connection between secondary battery cells.

In another example, the welding of the secondary battery may be welding inside a secondary battery module or welding between secondary battery modules. For example, the welding of the secondary battery may be welding between cells or parts within the secondary battery module, or welding for connection between secondary battery modules.

First, the secondary battery cell of embodiments, as a lithium ion secondary battery cell, is described by way of example as a cylindrical secondary battery cell or a prismatic secondary battery cell. However, the invention is not limited thereto, and may also be applied to various types of secondary battery cells, such as a lithium polymer secondary battery cell or a pouch-type secondary battery cell.

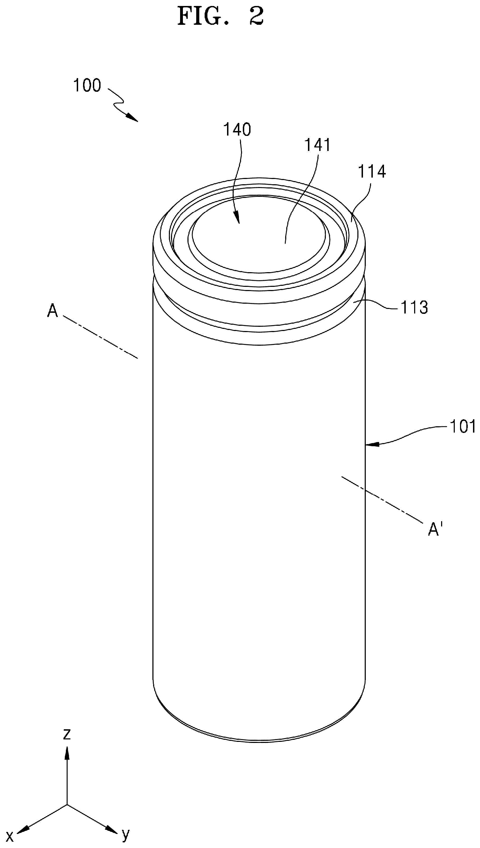

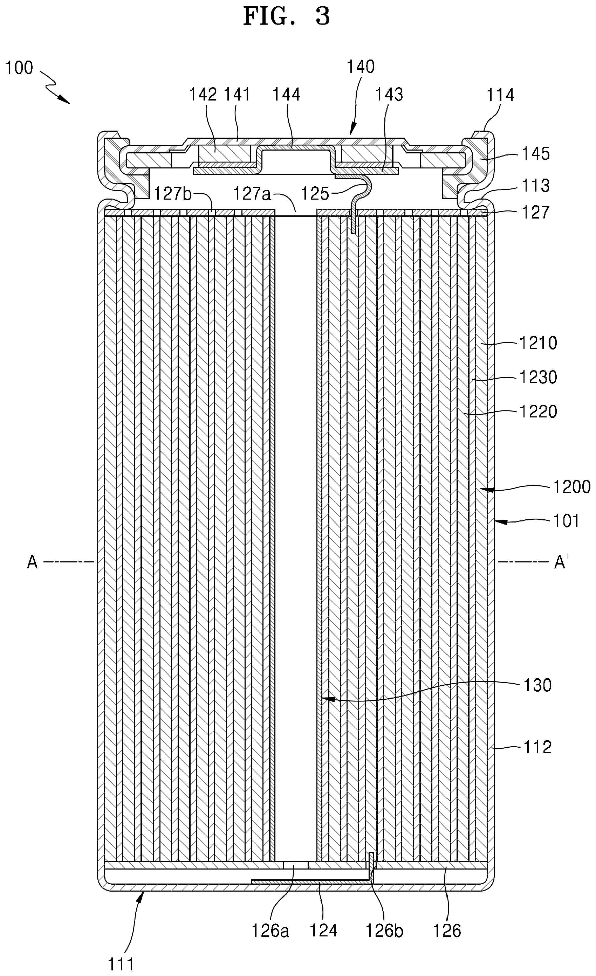

FIG. 2 is a perspective view schematically illustrating an example of a secondary battery cell according to embodiments of the invention, and FIG. 3 is a cross-sectional view schematically illustrating an example of a cross section taken along line A-A' of FIG. 2.

Referring to FIGS. 2 and 3, a cylindrical secondary battery cell 100 applicable to a secondary battery welding bead inspection method and system according to embodiments of the invention may include a cylindrical can 101, an electrode assembly 1200, and a cap assembly 140. In some embodiments, the cylindrical secondary battery cell 100 may further include a center pin 130. In some embodiments, in the secondary battery cell 100, the cap assembly 140 may also perform a current interrupt operation, and thus may also be referred to as a current interrupt device.

Although not limited thereto, in embodiments, the diameter of the secondary battery cell 100 may be 46 mm. The cylindrical can 101 surrounding the surface of the secondary battery cell 100 may include a roughly circular bottom portion 111 and a cylindrical sidewall 112 extending upward by a certain length from the circumference of the bottom portion 111. During the manufacturing process of the secondary battery cell 100, an upper portion of the cylindrical can 101 is open. As illustrated in FIG. 3, during the assembly process of the secondary battery cell 100, the electrode assembly 1200 and the center pin 130 may be inserted into the cylindrical can 101 together with an electrolyte. The cylindrical can 101 may be formed of, for example, but not limited to, steel, stainless steel, aluminum, an aluminum alloy or an equivalent thereof.

In addition, the cylindrical can 101 may include a beading part 113 recessed inwardly at a lower portion thereof around the cap assembly 140 to prevent the cap assembly 140 from being detached to the outside, and a crimping part 114 bent inwardly at an upper portion thereof.

The electrode assembly 1200 may be accommodated inside a cylindrical can 101. The electrode assembly 1200 may include a negative electrode plate 1210 in which a negative electrode active material (e.g., graphite, carbon, etc.) is coated on a negative electrode current collector plate, a positive electrode plate 1220 in which a positive electrode active material (e.g., transition metal oxide (LiCoO₂, LiNiO₂, LiMn₂O₄, etc.)) is coated on a positive electrode current collector plate, and a separator 1230 positioned between the negative electrode plate 1210 and the positive electrode plate 1220 to prevent short circuiting and allow only the movement of lithium ions. The negative electrode plate 1210, the positive electrode plate 1220, and the separator 1230 may be wound in a roughly cylindrical shape. Here, for example and without limitation, the negative electrode current collector plate may be formed of copper (Cu) foil, the positive electrode current collector plate may be formed of aluminum (Al) foil, and the separator 1230 may be formed of polyethylene (PE) or polypropylene (PP).

A negative electrode tab 124 of the electrode assembly 1200 may be welded to the bottom portion 111 of the cylindrical can 101. Therefore, the cylindrical can 101 may operate as a negative electrode. Conversely, a positive electrode tab 125 may be welded to the bottom portion 111 of the cylindrical can 101, in which case the cylindrical can 101 may operate as a positive electrode.

A first insulating plate 126, which is coupled to the cylindrical can 101 and has a first hole 126a formed in the center thereof and a second hole 126b formed on the outside thereof, may be interposed between the electrode assembly 1200 and the bottom portion 111. The first insulating plate 126 serves to prevent the electrode assembly 1200 from making electrical contact with the bottom portion 111 of the cylindrical can 101. In particular, the first insulating plate 126 serves to prevent the positive electrode plate 1220 of the electrode assembly 1200 from making electrical contact with the bottom portion 111. Here, the first hole 126a serves to allow gas to quickly move upward through the center pin 130 when a large amount of gas is generated due to an abnormality in the secondary battery cell 100, and the second hole 126b serves to allow the negative electrode tab 124 to be welded therethrough to the bottom portion 111.

Additionally, a second insulating plate 127, which is coupled to the cylindrical can 101 and has a first hole 127a formed in the center thereof and a plurality of second holes 127b formed on the outside thereof, may be interposed between the electrode assembly 1200 and the cap assembly 140. The second insulating plate 127 serves to prevent the electrode assembly 1200 from making electrical contact with the cap assembly 140. In particular, the second insulating plate 127 serves to prevent the negative electrode plate 1210 of the electrode assembly 1200 from making electrical contact with the cap assembly 140. Here, the first hole 127a serves to allow gas to quickly move to the cap assembly 140 when a large amount of gas is generated due to an abnormality in the secondary battery cell 100, and some of the second holes 127b serve to allow the positive electrode tab 125 to be welded therethrough to the cap assembly 140. Additionally, the remaining second holes 127b serve to allow the electrolyte to quickly flow into the electrode assembly 1200 during the electrolyte injection process.

In addition, the diameter of the first holes 126a and 127a of the first and second insulating plates 126 and 127 is formed to be smaller than the diameter of the center pin 130, thereby preventing the center pin 130 from electrically contacting the bottom portion 111 of the cylindrical can 101 or the cap assembly 140 upon external impact.

The center pin 130, which is in the form of a hollow circular pipe, may be coupled to the approximate center of the electrode assembly 1200. The center pin 130 may be formed of, for example, but not limited to, steel, stainless steel, aluminum, an aluminum alloy, or polybutylene terephthalate. The center pin 130 serves to suppress deformation of the electrode assembly 1200 during charging and discharging of the secondary battery cell 100, and functions as a passage for the gas generated inside the secondary battery cell 100. In some embodiments, the center pin 130 may be omitted.

The cap assembly 140 may include a top plate 141, a middle plate 142, an insulating plate 143, and a bottom plate 144.

The middle plate 142 may be located at the bottom of the top plate 141 and may have a roughly flat shape.

The insulating plate 143 may be formed in a circular ring shape having a certain width when viewed from below. Additionally, the insulating plate 143 serves to insulate the middle plate 142 and the bottom plate 144 from each other. The insulating plate 143 may be, for example, but not limited to, interposed and ultrasonically welded between the middle plate 142 and the bottom plate 144.

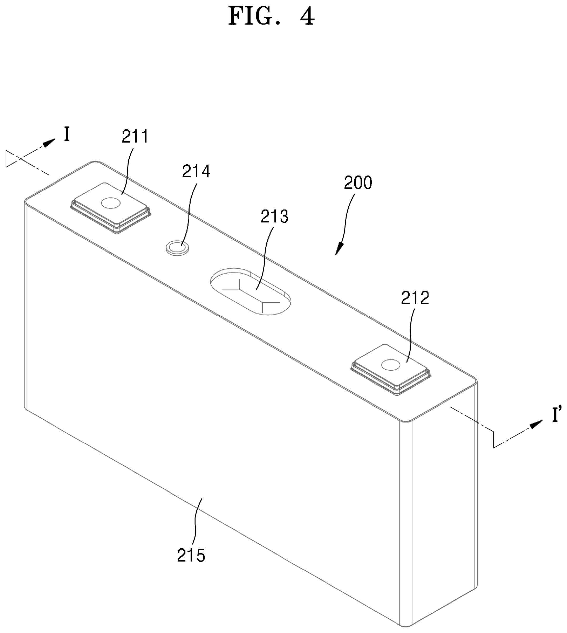

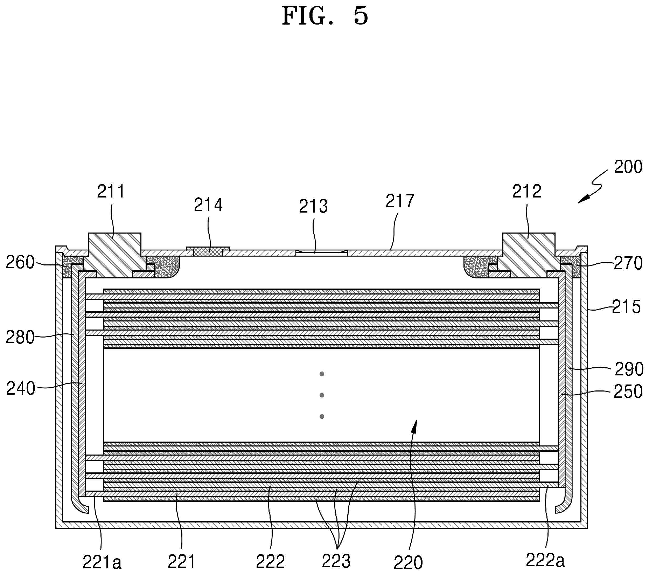

FIG. 4 is a perspective view schematically illustrating another example of the secondary battery cell according to embodiments of the invention, and FIG. 5 is a cross-sectional view schematically illustrating an example of a cross section taken along line I-I' of FIG. 4.

Referring to FIGS. 4 and 5, a prismatic secondary battery cell 200 that may be applied to a secondary battery welding bead inspection method and system according to embodiments of the invention may include a case 215, an electrode assembly 220 accommodated in the case 215, and an electrolyte. The electrode assembly 220 and the electrolyte electrochemically react, thereby generating energy.

One side of the secondary battery cell 200 may be provided with a terminal portion (211, 212) electrically connected to a connection tab (not illustrated), a vent 213 that is a passage for discharging gas generated internally, and an electrolyte injection port 214 for injecting the electrolyte into the case 215. The terminal portion (211, 212) of the secondary battery cell 200 may include a first terminal 211 and a second terminal 212 having different polarities. For example, when the first terminal 211 is a positive terminal, the second terminal 212 may be a negative terminal, and conversely, when the first terminal 211 is a negative terminal, the second terminal 212 may be a positive terminal. That is, the first terminal 211 and the second terminal 212 are formed with different electrical polarities and are not limited to specific polarity.

Meanwhile, terminal portions (211, 212) of adjacent secondary battery cells 200 may be electrically connected in series and/or in parallel by means of a connection tab. For example, a first terminal 211 of one secondary battery cell 200 may be electrically connected to a second terminal 212 of another adjacent secondary battery cell 200 through a connection tab, and a second terminal 212 of the one secondary battery cell 200 may be electrically connected to a first terminal 211 of the adjacent secondary battery cell 200 through another connection tab. Each secondary battery cell 200 may adopt various connection structures as needed, and the number and arrangement of connected secondary battery cells 200 may be changed as needed.

Meanwhile, the secondary battery cell 200 according to embodiments of the invention may include at least one electrode assembly 220 in which first electrode plates 221 and second electrode plates 222, each composed of a plurality of sheets, are alternately stacked with separators 223 therebetween, and a case 215 in which the electrode assembly 220 is accommodated.

The first electrode plates 221 and the second electrode plates 222 of the secondary battery cell 200 may have different polarities. For example, when the first electrode plates 221 are positive electrodes, the second electrode plates 222 may be negative electrodes, and conversely, when the first electrode plates 221 are negative electrodes, the second electrode plates 222 may be positive electrodes. That is, the first electrode plates 221 and the second electrode plates 222 are formed with different electrical polarities and are not limited to specific polarity.

The first electrode plates 221 and the second electrode plates 222 may each include a coated portion, which is an area where an active material is applied to a current collector formed of a thin metal foil, and a first uncoated portion 221a and a second uncoated portion 222a, which are areas where the active material is not coated.

The electrode assembly 220 may be formed as a structure in which the first electrode plates 221 and the second electrode plates 222, each composed of a plurality of sheets, are alternately stacked with the separators 223 in between. However, the invention is not limited thereto, and the first electrode plates 221 and the second electrode plates 222 may be wound with the separators 223, which are insulators, interposed therebetween.

The case 215 may form the overall exterior of the secondary battery cell 200 and may be formed of a conductive metal such as aluminum, an aluminum alloy, or nickel-plated steel. Additionally, the case 215 may provide a space in which the electrode assembly 220 is accommodated.

The secondary battery cell 200 may include a cap plate 217 covering the opening of the case 215, and the case 215 and the cap plate 217 may be formed of a conductive material. Here, the first terminal 211 and the second terminal 212 electrically connected to the first electrode plates 221 or the second electrode plates 222 may be installed to protrude outwardly through the cap plate 217.

The outer circumferential surfaces of upper pillars of the first terminal 211 and the second terminal 212 protruding outward from the cap plate 217 may be threaded and fixed to the cap plate 217 by nuts.

However, the invention is not limited thereto, and the first terminal 211 and the second terminal 212 may be formed in a rivet structure and may be riveted to the cap plate 217, or may be welded to the cap plate 217.

The cap plate 217 may be formed of a thin plate and may be joined to the opening of the case 215, and in the cap plate 217, the electrolyte injection port 214, in which a sealing plug may be installed, may be formed and a vent 213 with a notch may be installed.

The first terminal 211 and the second terminal 212 may be electrically connected to a current collector including a first current collector 240 and a second current collector 250 that are welded to the first uncoated portions 221a of the first electrode plates 221 and the second uncoated portions 222a of the second electrode plates 222.

For example, the first terminal 211 and the second terminal 212 may be welded to the first current collector 240 and the second current collector 250, respectively. However, the invention is not limited thereto, and the first terminal 211 and the second terminal 212 and the first current collector 240 and the second current collector 250 may be formed by being integrally combined.

Additionally, insulating members may be installed between the electrode assembly 220 and the cap plate 217. Here, the insulating members may include a first lower insulating member 260 and a second lower insulating member 270, and the first lower insulating member 260 and the second lower insulating member 270 may be installed between the electrode assembly 220 and the cap plate 217.

According to embodiments, one end of each separating member that may be installed to face one side of the electrode assembly 220 may be installed between the insulating members, the first terminal 211, and the second terminal 212. Here, the separating members may include a first separating member 280 and a second separating member 290.

Accordingly, one end of each of the first and second separating members 280 and 290 that may be installed to face one side of the electrode assembly 220 may be installed between the first and second lower insulating members 260 and 270 and the first and second terminals 211 and 212.

Finally, the first and second terminals 211 and 212 welded to the first and second current collectors 240 and 250 may be joined to the ends of the first and second lower insulating members 260 and 270 and the ends of the first and second separating members 280 and 290.

In the secondary battery welding bead inspection method according to embodiments of the invention, the step (S10) of setting an area where a welding bead exists is the step of setting an area where a welding bead exists from a welding portion using a confocal optical device.

The confocal optical device may be an optical device capable of measuring the height or depth in the z-axis direction of a measurement target, a confocal image, and the position coordinates of the confocal image by irradiating light onto the measurement target through a light source and selectively detecting only the portion of the reflected light that matches the focus.

In embodiments, the step (S10) of setting an area where a welding bead exists may include measuring a z-axis profile of a welding portion using a confocal optical device, and setting, from a result of measuring the z-axis profile, an area where a welding bead exists in the welding portion. Measuring the z-axis profile may include measuring the position of, and a change in, the z-axis direction height or depth of the surface of the welding portion using the confocal optical device.

Although not limited thereto, the z-axis profile measurement result of the welding portion may be data obtained by digitizing position information of the z-axis direction height or depth of the welding portion surface, and may be data that represents changes in the z-axis direction height or depth of the welding portion surface.

The z-axis profile measurement result may be, but is not limited to, data numerically expressed as positional information of the z-axis direction height or depth of the welding portion surface, or data expressed as a graph representing data that represents changes in the z-axis direction height or depth of the welding portion surface.

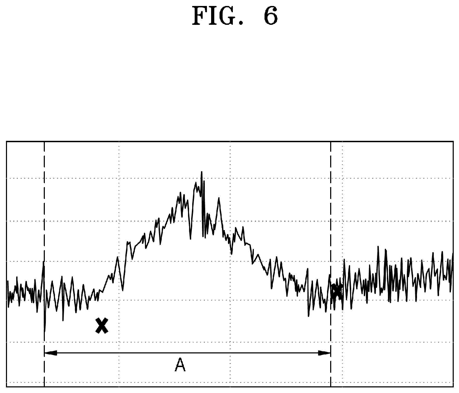

FIG. 6 is a graph showing a z-axis profile measurement result for setting an area where a welding bead exists according to embodiments of the invention.

In embodiments, in a graph representing the z-axis profile measurement result, an x-axis represents scan length, which may be, for example, distance scanned along a welding portion or welding bead surface. A y-axis represents z-axis distance, which may be, for example, height, depth, or distance in a z-axis direction.

In embodiments, a z-axis step height variation of the welding portion may be analyzed from the z-axis profile measurement result. For example, the z-axis step height variation can be defined as a variation in height in the z-axis direction, or may represent a variation in a z-axis step height (Δheight). In addition, by analyzing the z-axis step height variation, an area with a significant z-axis step height variation may be set as an area where the welding bead exists.

That is, by analyzing a region exhibiting a height difference distinct from the surrounding base material of the welding portion based on the z-axis profile measurement result obtained using the confocal optical device, an area containing a welding bead may be extracted and an area where the welding bead exists may be set.

For example, referring to FIG. 6, in a graph showing the z-axis profile measurement result, region A with a significant z-axis height variation may appear. This may be due to a z-axis step height variation from the boundary of a welding bead formed by laser melting, that is, from the end to the portion where the welding bead is formed such that a height variation distinct from the surroundings occurs.

For example, region A may be identified as having a significant z-axis height variation and detected as an area where a welding bead exists, since the height of a region where a welding bead is formed within the welding portion becomes higher than that of the surroundings. Alternatively, region A may be identified as having a significant z-axis height variation and set as the area where a welding bead exists, since a region where a welding bead is formed within the welding portion becomes lower than that of the surroundings.

Although not limited thereto, the area where a welding bead exists, as set via the z-axis profile, may be an area including a welding bead, or an area including a portion where the welding bead is formed, the boundary of the welding bead, and the periphery of the boundary of the welding bead.

Although not limited thereto, in embodiments, before the step (S10) of setting an area where a welding bead exists, the secondary battery welding bead inspection method according to embodiments of the invention may further include setting a reference value for detecting an area where a welding bead exists from the z-axis profile measurement result obtained using the confocal optical device.

When the z-axis profile measurement result deviates from the reference value, it may be determined that a welding bead is formed, thereby setting an area where a welding bead exists.

The step (S20) of obtaining a confocal image of an area where a welding bead exists and the position coordinates of the confocal image is the step of obtaining a confocal image of an area where a welding bead exists and the position coordinates of the confocal image using the confocal optical device. That is, step S20 is the step of obtaining a confocal image and the position coordinates of the confocal image so that image processing may be performed on the set area where a welding bead exists.

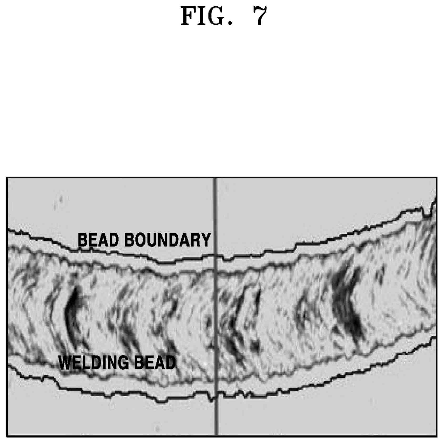

FIG. 7 is a confocal optical image of an area where a welding bead exists, as measured according to embodiments of the invention.

For example, referring to FIG. 7, the boundary of the welding bead may be detected for the area where the welding bead exists, as set in the step (S10) of setting an area where a welding bead exists, based on the confocal image obtained from the confocal optical device and the position coordinates of the confocal image. Although not limited thereto, the detected boundary of the welding bead may include the periphery of the boundary of the welding bead that has not been determined as the exact boundary of the welding bead. For example, the detected boundary of the welding bead may also include the periphery of the boundary of the welding bead or a portion of the base material around the boundary thereof.

The confocal image obtained from the confocal optical device may refer to a confocal optical image. Additionally, the position coordinates of the confocal image may include x-axis, y-axis, and z-axis position coordinates for the area illustrated in the confocal image.

For example, the confocal optical image may represent the shape of the x-y plane of the area where the welding bead exists. Additionally, the position coordinates of the confocal optical image may include x-axis position coordinates and y-axis position coordinates representing the x-y plane, and z-axis position coordinates representing heights corresponding to the x-axis positions and the y-axis positions.

Meanwhile, in the secondary battery welding bead inspection method according to embodiments of the invention, the wavelength band used in the confocal optical device may be a visible light band of 380 nm to 780 nm.

Although not limited thereto, in embodiments, before proceeding with the step (S10) of setting an area where a welding bead exists or the step (S20) of obtaining a confocal image of the area where the welding bead exists and the position coordinates of the confocal image (S20), the light wavelength may be adjusted according to the type of base material or welding metal.

Also, a wavelength with high light reflectance may be selected depending on the type of base metal of the welding portion, and the measurement focus of the confocal optical device may be adjusted depending on the selected wavelength.

Since the reflectance of the base material or welding metal to be welded varies depending on the wavelength, confocal measurement may be performed by selecting an appropriate wavelength band in consideration of the reflectance of the metal material to be inspected, before measurement using the confocal optical device.

In measurement using the confocal optical device, which irradiates light and detects only a portion of the light reflected from the measurement target that matches the focus, the intensity of the reflected light may vary depending on the light reflectance of the surface of the measurement target.

For example, as the light reflectance of the measurement target increases, the intensity of the reflected light increases, which may reduce noise in measurement results and improve the accuracy of z-axis profile measurement.

Although not limited thereto, the distance between a lens of the confocal optical device and the measurement target may be adjusted to adjust the measurement focus of the confocal optical device.

For example, to adjust the distance between the lens of the confocal optical device and the measurement target, the focus may be adjusted by moving the lens in an up-down direction along the z-axis or by moving the measurement target in the up-down direction along the z-axis. The measurement target may be, but is not limited to, a secondary battery including a welding portion or a portion of such a secondary battery.

The step (S30) of performing image processing to determine a boundary of the welding bead is the step of determining the exact boundary of the welding bead by performing image processing using the confocal image, obtained from the previous step (S20), of the area where the welding bead exists and the position coordinates of the confocal image.

When foreign substances are present in the welding portion, which is the measurement target, however, it may be difficult to detect the exact location of the welding bead with confocal measurement using the confocal optical device, which is an inspection technique that measures a surface height profile.

Accordingly, the secondary battery welding bead inspection method according to embodiments of the invention may combine confocal inspection and image processing and may thereby determine the exact boundary of the welding bead, thus improving detection capability.

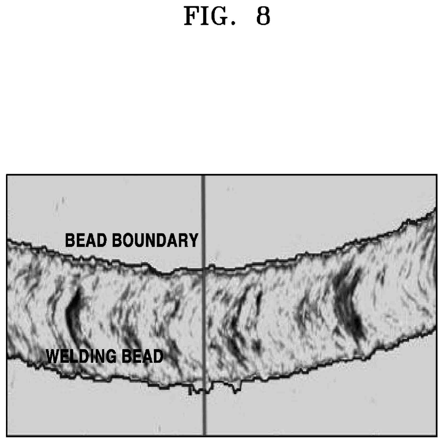

FIG. 8 is an image showing a result of performing image processing on a confocal image of an area where a welding bead exists, as measured according to embodiments of the invention, to thereby determine the exact boundary of the welding bead.

For example, referring to FIG. 8, by performing image processing using the confocal image and the position coordinates of the confocal image obtained from the previous step (S20), the boundary of the welding bead may be detected from the area where the welding bead exists, as set in the previous step (S10), thereby determining the exact boundary.

Although not limited thereto, in embodiments, a threshold processing method may be applied during the image processing.

Image processing using the thresholding method may first set a threshold (or reference value) in advance for pixel brightness values of an image. Thereafter, using the confocal image and its position coordinates for the area where a welding bead exists, as set in the previous step (S10), image processing may be performed as 2D image conversion processing that binarizes each pixel of the confocal image into black and white when the pixel brightness value deviates from the threshold value.

In embodiments, an area or boundary in which a sharp contrast change occurs due to a z-axis step height from the area where a welding bead exists, as set in the previous step (S10), may be identified by the image processing, thereby allowing the boundary of the welding bead to be identified accurately. Accordingly, the exact boundary of the welding bead may be determined by performing image processing.

The step (S40) of detecting a pinhole is the step of detecting a pinhole present in a welding bead whose boundary has been determined using the confocal optical device.

In embodiments, the step (S40) of detecting a pinhole may include re-measuring the z-axis profile of the welding bead whose boundary has been determined using the confocal optical device, and detecting, from a result of re-measuring the z-axis profile, a pinhole present in the welding bead whose boundary has been determined.

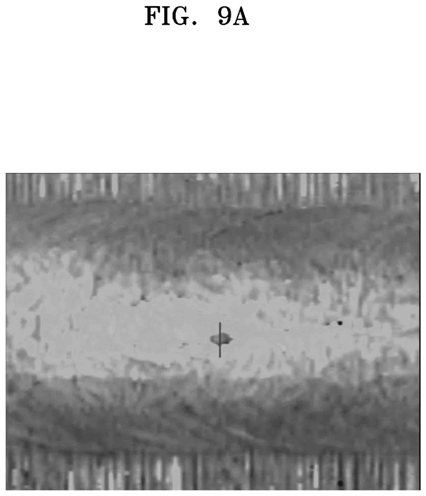

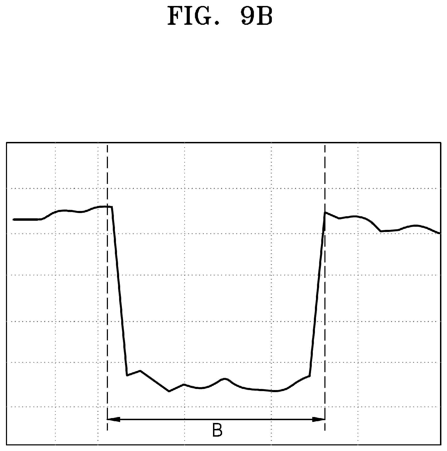

FIG. 9A is a confocal z-axis image measured to detect a pinhole present in a welding bead whose exact boundary has been determined according to embodiments of the invention, and FIG. 9B is a graph showing a result of measuring a z-axis profile to detect a pinhole present in a welding bead whose exact boundary has been determined according to embodiments of the invention.

In embodiments, in a graph representing the z-axis profile measurement result, an x-axis may represent scan length, which may be, for example, a distance scanned along a welding portion or welding bead surface. A y-axis may represent z-axis distance, which may be, for example, height, depth, or distance in the z-axis direction.

In embodiments, a z-axis step height variation of the welding bead may be analyzed from a result of re-measuring the z-axis profile. In addition, by analyzing the z-axis step height variation, an area with a significant z-axis step height variation may be set as an area where a pinhole exists.

That is, based on a z-axis profile re-measurement result obtained using the confocal optical device, a pinhole present in the welding bead may be detected by analyzing a region exhibiting a significant height variation within the area where the welding bead whose boundary has been determined exists.

For example, referring to FIG. 9A, a confocal z-axis image may be identified as a z-axis profile re-measurement result, and a welding bead whose exact boundary has been determined and a pinhole formed in the welding bead may be identified. Meanwhile, although not limited thereto, in the confocal z-axis image of FIG. 9A, brighter areas may represent areas of greater height.

For example, referring to FIG. 9B, in the graph representing the z-axis profile re-measurement result, region B with a significant z-axis height variation may appear. This may be due to the formation of a pinhole in the welding bead whose boundary has been determined, resulting in a z-axis step height variation.

In embodiments, region B may be identified as having a significant z-axis step height variation and detected as an area where a pinhole exists, since the height of a region where a pinhole is formed within the welding bead becomes lower than that of the surroundings. For example, region B may be a region where a pinhole formed within the welding bead, as shown in FIG. 9A, exists.

Although not limited thereto, in embodiments, prior to the step (S40) of detecting a pinhole, the secondary battery welding bead inspection method according to embodiments of the invention may further include setting a reference value for detecting a pinhole from the z-axis profile re-measurement result obtained using the confocal optical device.

When the z-axis profile re-measurement result deviates from the reference value, it may be analyzed that a pinhole exists in the welding bead, and the pinhole present in the welding bead may be detected. For example, although not limited thereto, when the z-axis profile re-measurement result is less than the reference value, it may be determined that a pinhole exists.

In embodiments, the step (S40) of detecting a pinhole may include measuring at least one of the position, diameter, and depth of the pinhole.

A pinhole may be formed by partially penetrating the surface of the welding portion or the entire welding portion in the z-axis direction or the thickness direction. For example, when there exists a pinhole penetrating the welding portion and laser welding is performed within the secondary battery cell or between secondary battery cells, there is a risk of electrolyte leakage, and thus, it is important to detect such a pinhole in advance to improve the stability of the secondary battery.

The secondary battery welding bead inspection method according to embodiments of the invention may accurately identify the location of a pinhole that may exist within the welding bead by finding the exact area of the welding bead.

Furthermore, quantitative dimensions such as the diameter and depth of the pinhole may be measured through a z-axis profile using a confocal optical device, and presence or absence of penetration of the welding portion and the base material of the welding portion may be detected through the measured depth of the pinhole.

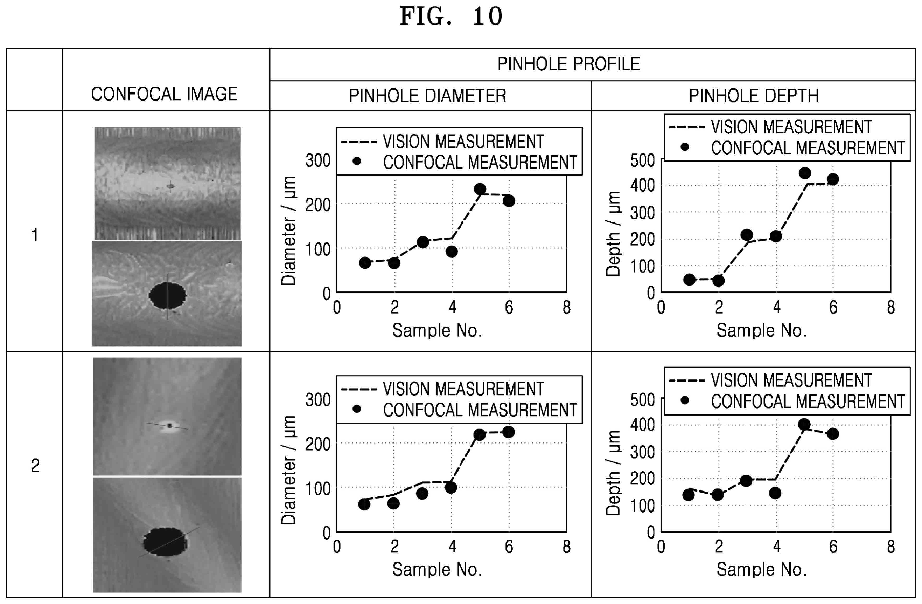

FIG. 10 is a table showing a result of comparing the quantitative dimensions of pinholes measured through a confocal measurement test and the quantitative dimensions of pinholes measured through a vision measurement test according to embodiments of the invention.

Referring to FIG. 10, as an example, the pinhole diameter and pinhole depth within two types of welding points were measured through a vision measurement using a laser microscope and confocal measurement using a confocal optical device according to embodiments of the invention. Comparing the vision measurement and confocal measurement results, the two measurement results were similar. Accordingly, it may be confirmed that the pinhole detection of the secondary battery welding bead inspection method according to embodiments of the invention exhibits high accuracy.

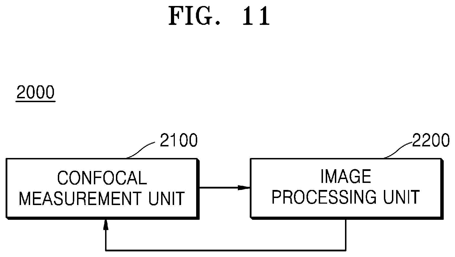

FIG. 11 is a block diagram schematically illustrating a secondary battery welding bead inspection system according to embodiments of the invention.

Referring to FIG. 11, according to another aspect, a secondary battery welding bead inspection system 2000 of the invention includes: a confocal measurement unit 2100 that sets an area where a welding bead exists from a welding portion using a confocal optical device, and measures a confocal image of the area where a welding bead exists and position coordinates of the confocal image; and an image processing unit 2200 that receives the confocal image of the area where a welding bead exists and the position coordinates of the confocal image from the confocal measurement unit 2100, performs image processing, and determines a boundary of the welding bead, and the confocal measurement unit 2100 detects a pinhole present in the welding bead whose boundary has been determined by the image processing unit 2200.

Meanwhile, any redundant descriptions overlapping with those made with reference to FIGS. 1 to 8 will be omitted.

The confocal measurement unit 2100 is configured to perform confocal measurement using a confocal optical device (not illustrated). In embodiments, the confocal measurement unit 2100 may measure a z-axis profile from the welding portion of a secondary battery using the confocal optical device and may set an area where a welding bead exists.

In addition, the confocal measurement unit 2100 may measure a confocal image and the position coordinates of the confocal image for the set area where a welding bead exists using the confocal optical device.

In embodiments, the confocal measurement unit 2100 may analyze a z-axis step height variation of the welding portion from the z-axis profile measurement result of the welding portion. In addition, by analyzing the z-axis step height variation, an area with a significant z-axis step height variation may be set as an area where a welding bead exists.

Although not limited thereto, in embodiments, the confocal measurement unit 2100 further includes a measurement result analysis unit (not illustrated), and may analyze the z-axis height variation from the z-axis profile measurement result via the measurement result analysis unit and set an area where a welding bead exists.

That is, by analyzing a region exhibiting a height difference distinct from the surrounding base material of the welding portion based on the z-axis profile measurement result obtained by the confocal measurement unit 2100 using the confocal optical device, an area containing a welding bead may be extracted and an area where a welding bead exists may be set.

Although not limited thereto, the area where a welding bead exists, as set via the z-axis profile, may be an area including a welding bead, or an area including a portion where the welding bead is formed, the boundary of the welding bead, and the periphery of the boundary of the welding bead.

Although not limited thereto, in embodiments, the confocal measurement unit 2100 may further include a reference value setting unit (not illustrated) that sets a reference value for detecting an area where a welding bead exists from the z-axis profile measurement result obtained using the confocal optical device.

Accordingly, when the z-axis profile measurement result deviates from the reference value, it may be determined that a welding bead is formed, and an area where a welding bead exists may be set. For example, when the z-axis profile measurement result exceeds the reference value, it may be determined that a welding bead is formed, and when the z-axis profile measurement result is less than the reference value, it may be determined that a welding bead is formed.

In embodiments, in the confocal measurement unit 2100, the confocal optical device may adjust the light wavelength according to the type of base metal and welding metal, before setting the area where a welding bead exists or measuring a confocal image of the area where a welding bead exists and the position coordinates of the confocal image.

Additionally, in the confocal measurement unit 2100, the confocal optical device may adjust the measurement focus by selecting a wavelength with high light reflectance depending on the type of base metal.

Since the base material or welding metal to be welded has different reflectance depending on the wavelength band, confocal measurement may be performed, by selecting an appropriate light wavelength in consideration of the reflectance of the metal material to be inspected, before measurement using a confocal optical device.

Although not limited thereto, the distance between a lens of the confocal optical device and a measurement target may be adjusted to adjust the measurement focus of the confocal optical device.

For example, to adjust the distance between the lens of the confocal optical device and the measurement target, the focus may be adjusted by moving the lens in the up-and-down direction along the z-axis or by moving the measurement target in the up-and-down direction along the z-axis. The measurement target may be, but is not limited to, a secondary battery including a welding portion or a portion of such a secondary battery.

The image processing unit 2200 is configured to receive a confocal image and its coordinates for the set area where a welding bead exists from the confocal measurement unit 2100, perform image processing using the same, and determine the boundary of the welding bead.

When foreign substances are present in the welding portion, which is the measurement target, however, it may be difficult to detect the exact location of the welding bead with measurement using the confocal optical device, which is an inspection technique that measures a surface height profile.

Accordingly, the secondary battery welding bead inspection system 2000 may include the confocal measurement unit 2100 and the image processing unit 2200 to combine confocal inspection and image processing and may thereby determine the exact boundary of a welding bead, thus improving detection capability.

Although not limited thereto, in embodiments, the image processing unit 2200 may perform image processing by applying a threshold processing method.

Image processing using the thresholding method may first set a threshold (or reference value) in advance for pixel brightness values of an image. Then, using the confocal image and its position coordinates for the area where the welding bead exists, as set by the confocal measurement unit 2100, image processing may be performed as 2D image conversion processing that binarizes each pixel of the confocal image into black and white when the pixel brightness value deviates from the threshold value.

In embodiments, the image processing may accurately identify the boundary of a welding bead through an area or boundary where a sharp contrast change occurs due to a z-axis step height from the area where a welding bead exists, as set by the confocal measurement unit 2100. Accordingly, the exact boundary of a welding bead may be determined through image processing.

Meanwhile, the confocal measurement unit 2100 may re-measure the z-axis profile of a welding bead whose exact boundary has been determined by the image processing unit 2200, and detect a pinhole present in the welding bead whose boundary has been determined from a result of re-measuring the z-axis profile.

In embodiments, the confocal measurement unit 2100 may analyze, from the z-axis profile re-measurement result, a z-axis step height variation of the welding bead whose boundary has been determined. In addition, by analyzing the z-axis step height variation, an area with a significant z-axis step height variation may be detected as an area where a pinhole exists.

Although not limited thereto, in embodiments, the confocal measurement unit 2100 further includes a measurement result analysis unit, and may detect, from a z-axis profile measurement result in the measurement result analysis unit, an area where a pinhole exists by analyzing a z-axis height variation of a welding bead whose boundary has been determined.

That is, based on the z-axis profile re-measurement result obtained using the confocal optical device, a region with a significant height variation within the area of the welding bead whose exact boundary has been determined may be analyzed, thereby detecting a pinhole present in the welding bead.

In embodiments, the confocal measurement unit 2100 may measure at least one of the position, diameter, and depth of the pinhole from the z-axis profile re-measurement result.

The secondary battery welding bead inspection system 2000 may also accurately determine the location of a pinhole that may exist in a welding bead by finding the exact area of the welding bead.

Furthermore, quantitative dimensions such as the diameter and depth of the pinhole may be measured through a z-axis profile using a confocal optical device via the confocal measurement unit 2100, and presence or absence of penetration of the welding portion and the base material of the welding portion may be detected through the measured depth of the pinhole.

As described herein, according to the secondary battery welding bead inspection method and system of the invention, an accurate welding bead area may be identified by combining confocal measurement inspection and image processing. In addition, a pinhole, which is a defect that may exist in the welding bead area, may be accurately detected, and quantitative dimensions such as the diameter and depth of the pinhole may also be measured, which is advantageous for quality inspection of the welding portion of a secondary battery and may improve the stability of the secondary battery.

According to embodiments, the secondary battery welding bead inspection method and system of the invention may identify the exact area where the welding bead of a secondary battery welding portion exists by applying image processing to confocal inspection, thereby improving the detection capability for a welding bead.

According to embodiments, the secondary battery welding bead inspection method and system of the invention may apply image processing to confocal inspection to improve the detection capability for a welding bead, thereby identifying the exact area where a welding bead exists, and thus improving the detection capability for a pinhole within the welding bead.

According to embodiments, the secondary battery welding bead inspection method and system of the invention may detect a pinhole and determine presence or absence of penetration by the pinhole, thereby improving stability when applied to mass production of secondary batteries.

However, the effects that may be obtained through the invention are not limited to the effects described herein, and other technical effects not mentioned may be clearly understood by those skilled in the art from the description of the invention described herein.

Although the invention has been described herein with reference to limited embodiments and drawings, the invention is not limited thereto, and it is obvious that various modifications and variations are possible within the scope of the technical idea of the invention and the equivalent scope of the patent claims to be described herein by a person having ordinary skill in the art to which the invention pertains.

## Claims

1. A secondary battery welding bead inspection method comprising:
setting an area where a welding bead exists from a welding portion using a confocal optical device;
obtaining a confocal image of the area where a welding bead exists and position coordinates of the confocal image using the confocal optical device;
determining a boundary of the welding bead by performing image processing using the confocal image of the area where a welding bead exists and the position coordinates of the confocal image; and
detecting a pinhole present in a welding bead whose boundary has been determined using the confocal optical device.

2. The secondary battery welding bead inspection method of claim 1, wherein
setting the area where a welding bead exists includes:
measuring a z-axis profile of the welding portion using the confocal optical device; and
setting an area where a welding bead exists in the welding portion from a result of measuring the z-axis profile.

3. The secondary battery welding bead inspection method of claim 1 or 2, wherein:
a z-axis step height variation of the welding portion is analyzed from the result of measuring the z-axis profile, and
an area with a significant z-axis step height variation is set as the area where a welding bead exists in the welding portion.

4. The secondary battery welding bead inspection method of any one of the preceding claims, wherein
a light wavelength of the confocal optical device is adjusted according to types of base metal and welding metal of the welding portion.

5. The secondary battery welding bead inspection method of any one of the preceding claims, wherein
the image processing applies a threshold processing method.

6. The secondary battery welding bead inspection method of any one of the preceding claims, wherein
detecting the pinhole includes:
re-measuring the z-axis profile of the welding bead whose boundary has been determined using the confocal optical device; and
detecting a pinhole present in the welding bead whose boundary has been determined from a result of re-measuring the z-axis profile.

7. The secondary battery welding bead inspection method of any one of the preceding claims, wherein:
a z-axis step height variation of the welding bead whose boundary has been determined is analyzed from the result of re-measuring the z-axis profile, and
an area with a significant z-axis step height variation is detected as an area where a pinhole exists.

8. The secondary battery welding bead inspection method of any one of the preceding claims, wherein
detecting the pinhole includes measuring at least one of a position, diameter, and depth of the pinhole.

9. A secondary battery welding bead inspection system (2000) comprising:
a confocal measurement unit (2100) configured to set an area where a welding bead exists from a welding portion using a confocal optical device and measure a confocal image of the area where a welding bead exists and position coordinates of the confocal image; and
an image processing unit (2200) configured to receive the confocal image of the area where a welding bead exists and the position coordinates of the confocal image from the confocal measurement unit, perform image processing, and determine a boundary of the welding bead,
wherein the confocal measurement unit (2100) is further configured to detect a pinhole present in a welding bead whose boundary has been determined by the image processing unit (2200).

10. The secondary battery welding bead inspection system (2000) of claim 9, wherein
the confocal measurement unit (2100) is further configured to set an area where a welding bead exists by measuring a z-axis profile of the welding portion.

11. The secondary battery welding bead inspection system (2000) of claim 9 or 10, wherein
the confocal measurement unit (2100) is further configured to:
analyze a z-axis step height variation of the welding portion from a result of measuring the z-axis profile of the welding portion; and
set an area with a significant z-axis step height variation as an area where a welding bead exists in the welding portion.

12. The secondary battery welding bead inspection system (2000) of any one of claims 9 to 11, wherein
the image processing unit (2200) is further configured to perform image processing by applying a threshold processing method.

13. The secondary battery welding bead inspection system (2000) of any one of claims 9 to 12, wherein
the confocal measurement unit (2100) is further configured to:
re-measure the z-axis profile of the welding bead whose boundary has been determined; and
detect a pinhole present in the welding bead whose boundary has been determined from a result of re-measuring the z-axis profile.

14. The secondary battery welding bead inspection system (2000) of any one of claims 9 to 13, wherein:
a z-axis height variation of the welding bead whose boundary has been determined is analyzed from the result of re-measuring the z-axis profile, and
an area with a significant z-axis height variation is set as an area where a pinhole exists.

15. The secondary battery welding bead inspection system (2000) of any one of claims 9 to 14, wherein
at least one of a position, diameter, and depth of the pinhole is measured from the result of re-measuring the z-axis profile.
